# EUROPEAN PATENT SPECIFICATION

(11) **EP 4 498 668 B1**
(45) Date of publication and mention of the grant of the patent: **31.12.2025**
(21) Application number: 24156337.8
(22) Date of filing: 07.02.2024
(51) Int. Cl.: H04N 1/028, H04N 1/12

(54) **OPTICAL DEVICE AND DOCUMENT READING APPARATUS**
OPTISCHE VORRICHTUNG UND DOKUMENTENLESEGERÄT
DISPOSITIF OPTIQUE ET APPAREIL DE LECTURE DE DOCUMENT

(30) Priority: 28.07.2023 JP 2023123033
(43) Date of publication of application: 29.01.2025
(73) Proprietor: FUJIFILM Business Innovation Corp., Minato-ku Tokyo (JP)
(72) Inventor: HACHISUGA, Masaki, Yokohama-shi, Kanagawa (JP)
(74) Representative: Kurig, Thomas

(56) References cited:
- JP-A- 2015 012 347
- US-A1- 2009 073 510
- US-A1- 2023 133 357
- US-B2- 7 714 270

## Description

### BACKGROUND OF THE INVENTION

### (i) Field of the Invention

The present invention relates to an optical device and a document reading apparatus.

### (ii) Description of Related Art

In JP2015-019213A, there is described a document reading apparatus in which a reading guide member in which a background reflection member is disposed is attached such that a rear end portion of a document on a downstream side in a transport direction can enter a state in which the rear end portion is lifted and tilted to a certain angle when the document being transported comes into contact, a light guide body has an emission surface that guides and emits light from a light source in a direction in which the background reflection member is irradiated with the light, and a width of the emission surface in a sub-scanning direction is set to a dimension with which the light is also emitted to the background reflection member when the reading guide member enters a state of being tilted such that the light is reflected by the background reflection member and received by a light receiving unit.

In JP2015-012347A, there is described a document reading apparatus including a background reflecting unit that is disposed in a state in which light from a light source is reflected to pass through a reading position and received by a light receiving unit, and reflects, in a state in which a document does not exist, the amount of reflection light larger than the amount of document reflection light reflected by the document, in which the background reflecting unit is configured by processing a mirror surface to reflect the amount of reflection light smaller than the amount of mirror surface reflection light reflected by the mirror surface.

In JP2015-023428A, there is described a document reading apparatus including a light source that irradiates a document passing through a reading position with light, a background portion that pinches the document passing through the reading position and is opposite to the light source, a first detection unit that is on an upstream side than the reading position in a transport direction of the document and detects a tip of the document, a second detection unit that detects an end portion of the document based on a difference between the amount of light reflected by the background portion and the amount of light reflected by the document from the light source, and a processing unit that performs a tip process based on a result of the first detection unit and performs a tilting process based on a result of the second detection unit.

### SUMMARY OF THE INVENTION

In a case where the light guide body scatters the light incident from an end surface with a scatterer disposed in a direction in which a side surface extends, the amount of light received by the light receiving unit is reduced, and in a case where the amount of light is increased, the uneven amounts of light received by the light receiving unit occur.

The present invention is provided in the appended claims. The following disclosure serves a better understanding of the present invention. An object of the present disclosure is to reduce, in a case where a light guide body scatters light incident from an end surface with a scatterer disposed in a direction in which a side surface extends and emits the light, both a decrease in the amount of light received by a light receiving unit and occurrence of the uneven amounts of light received by the light receiving unit.

According to a first aspect of the present disclosure, there is provided an optical device including: a light guide body that scatters light incident from an end surface with a scatterer disposed in a direction in which a side surface extends and emits the light; a mirror surface reflecting plate that mirror-reflects the light emitted from the light guide body; a light receiving unit that receives the light reflected by the mirror surface reflecting plate; and a diffusion plate that diffuses and transmits the light emitted from the light guide body and emits the light onto the mirror surface reflecting plate, and diffuses and transmits the light reflected by the mirror surface reflecting plate and emits the light to the light receiving unit.

According to a second aspect of the present disclosure, in the optical device according to the first aspect, the diffusion plate may include a first layer having a first specular reflectance and a second layer having a second specular reflectance lower than the first specular reflectance, and the second layer is disposed to face a light receiving unit side.

According to a third aspect of the present disclosure, in the optical device according to the second aspect, in which the first layer may be a backing coat layer, and the second layer is a light diffusion layer.

According to a fourth aspect of the present disclosure, the optical device according to the first aspect, further includes: a lens unit that guides the light reflected by the mirror surface reflecting plate to the light receiving unit, in which the mirror surface reflecting plate may have a property of preventing the light receiving unit from being located within a focal depth of the lens unit.

According to a fifth aspect of the present disclosure, in the optical device according to the fourth aspect, in which the mirror surface reflecting plate may be provided with a recess portion shape disposed in a direction in which the side surface of the light guide body extends, to have the property.

According to a sixth aspect of the present disclosure, there is provided a document reading apparatus including: a light source that is provided on an end surface side of a light guide body and emits light; a reading window portion through which a document passes; and the optical device according to any one of the first aspect to the fifth aspect, in which in a case where the document passes through the reading window portion, the light receiving unit receives the light emitted from the light guide body and reflected by the document, and in a case where the document does not pass through the reading window portion, the light receiving unit receives the light reflected by the mirror surface reflecting plate.

With the first aspect of the present disclosure, in a case where the light guide body scatters the light incident from the end surface with the scatterer disposed in the direction in which the side surface extends and emits the light, it is possible to reduce both a decrease in the amount of light received by the light receiving unit and occurrence of the uneven amounts of light received by the light receiving unit.

With the second aspect of the present disclosure, it is possible to further decrease a possibility that the amount of light received by the light receiving unit is reduced.

With the third aspect of the present disclosure, it is possible to easily decrease the possibility that the amount of light received by the light receiving unit is reduced.

With the fourth aspect of the present disclosure, it is possible to further decrease the possibility of the occurrence of the uneven amounts of light received by the light receiving unit.

With the fifth aspect of the present disclosure, it is possible to easily decrease the possibility of the occurrence of the uneven amounts of light received by the light receiving unit.

With the sixth aspect of the present disclosure, in a case where the light guide body scatters the light incident from the end surface with the scatterer disposed in the direction in which the side surface extends and emits the light, it is possible to reduce both a decrease in the amount of light received by the light receiving unit and occurrence of the uneven amounts of light received by the light receiving unit.

### BRIEF DESCRIPTION OF THE DRAWINGS

Exemplary embodiment(s) of the present invention will be described in detail based on the following figures, wherein:
Fig. 1 is a diagram illustrating a configuration example of an image reading apparatus according to the present exemplary embodiment;
Fig. 2 is a perspective view illustrating an image reading unit according to the present exemplary embodiment;
Fig. 3 is an exploded perspective view illustrating the image reading unit according to the present exemplary embodiment;
Fig. 4 is a cross-sectional diagram (cross-sectional diagram taken along a line IV-IV of Fig. 5) illustrating the image reading unit according to the present exemplary embodiment;
Fig. 5 is a cross-sectional diagram (cross-sectional diagram taken along a line V-V of Fig. 4) illustrating the image reading unit according to the present exemplary embodiment;
Fig. 6 is an explanatory diagram describing a diffusion pattern and light emitted from a light emitting element according to the present exemplary embodiment;
Fig. 7 is a first graph illustrating an output value of light reflected by a mirror surface reflecting plate;
Fig. 8 is a second graph illustrating the output value of the light reflected by the mirror surface reflecting plate;
Fig. 9 is a diagram illustrating a dust detection and correction function;
Fig. 10 is a diagram illustrating a configuration example of the mirror surface reflecting plate according to the present exemplary embodiment;
Fig. 11 is a graph illustrating an output value of light reflected by the mirror surface reflecting plate in a case where a diffusion plate is disposed at the mirror surface reflecting plate;
Fig. 12 is a graph illustrating an output value of light reflected by the mirror surface reflecting plate in a case where a backing coat layer is disposed on an image reading unit side;
Fig. 13 is a partially enlarged graph of the graph in Fig. 12;
Fig. 14 is a graph illustrating an output value of light reflected by the mirror surface reflecting plate in a case where a light diffusion layer is disposed on the image reading unit side;
Fig. 15 is a partially enlarged graph of the graph in Fig. 14; and
Figs. 16A and 16B are diagrams illustrating a modification example of the mirror surface reflecting plate according to the present exemplary embodiment.

### DETAILED DESCRIPTION OF THE INVENTION

Hereinafter, exemplary embodiments of the present invention will be described in detail with reference to the accompanying drawings.

### [Image Reading Apparatus]

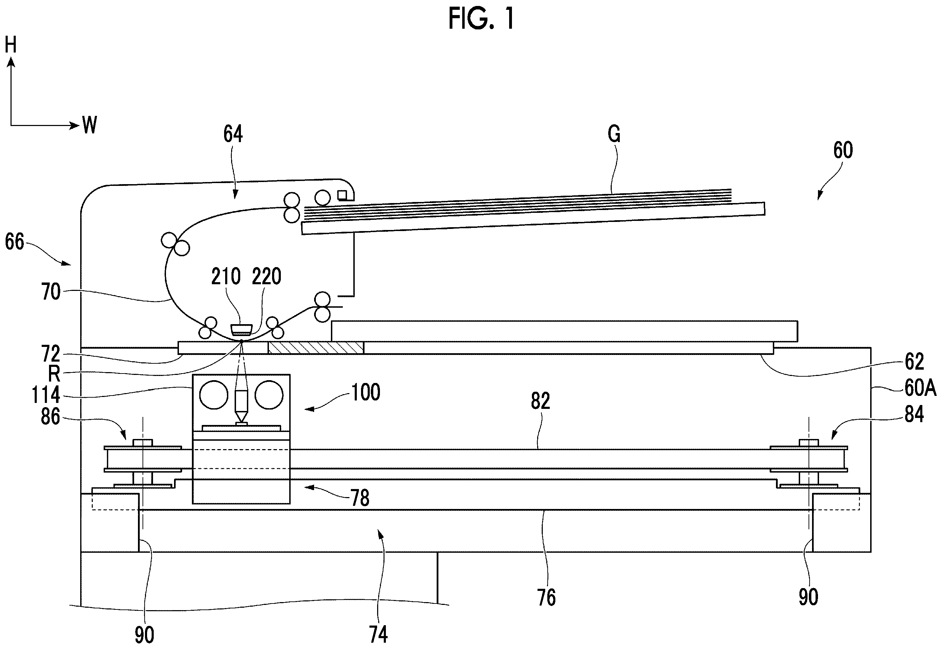

Fig. 1 is a diagram illustrating a configuration example of an image reading apparatus 60 according to the present exemplary embodiment. In Fig. 1, an up-down direction is indicated by H, and an apparatus width direction is indicated by W, respectively.

As illustrated in Fig. 1, the image reading apparatus 60 includes a first transparent plate 62 (so-called platen glass) on which a document G is placed in a case where an image of one document G is read, and a second transparent plate 72 disposed on one side (left side in Fig. 1) of the first transparent plate 62 in the apparatus width direction. The first transparent plate 62 and the second transparent plate 72 are fitted in an upper portion of a housing 60A in the image reading apparatus 60.

Above the first transparent plate 62 and the second transparent plate 72, an opening and closing cover 66 which opens or closes the first transparent plate 62 and the second transparent plate 72 is disposed. Inside the opening and closing cover 66, a transport unit 64 (so-called an ADF) which transports a plurality of documents G along a transport path 70 in the opening and closing cover 66 and passes the plurality of documents G through a document reading position R above the second transparent plate 72 is provided. Further, the transport unit 64 includes a reading guide member 210 that guides the document G being transported along the transport path 70 to the document reading position R and guides the document G in a discharge direction after passing through the document reading position R. Further, the reading guide member 210 is provided with a mirror surface reflecting plate 220 at a part of a lower surface portion facing the document reading position R.

In addition, in a space inside the housing 60A, an image reading unit 100 which reads an image of the document G placed on the first transparent plate 62 and the image of the document G transported to the document reading position R by the transport unit 64 is provided. Further, the image reading apparatus 60 includes a drive unit 74 which drives the image reading unit 100 in the apparatus width direction.

The drive unit 74 includes a shaft 76 extending in the apparatus width direction (a moving direction of the image reading unit 100) and a sliding member 78 which is attached to a lower surface of a housing 114 of the image reading unit 100 and which is slidably supported by the shaft 76.

Further, the drive unit 74 includes a motor (not illustrated), a drive pulley 84 which is rotationally driven by transmission of a drive force from the motor, a driven pulley 86 which is driven and rotated, and an endless belt 82 in an endless shape winding around the drive pulley 84 and the driven pulley 86. The drive pulley 84 is attached to one end of the shaft 76, and the driven pulley 86 is attached to the other end of the shaft 76.

Details of the image reading unit 100 will be described below.

In the image reading apparatus 60, the image reading unit 100 reads the image of the document G as follows. Specifically, in a case of reading the image of the document G transported by the transport unit 64, a drive force of the motor (not illustrated) is transmitted via the endless belt 82, so that the image reading unit 100 moves to a transport reading position on the other side in the apparatus width direction and stops, as illustrated in Fig. 1. The image reading unit 100 disposed at the transport reading position reads the image of the document G transported by the transport unit 64.

Further, in a case of reading the image of the document G placed on the first transparent plate 62, although not illustrated, the image reading unit 100 moves from a reading start position toward a reading end position in the apparatus width direction along the first transparent plate 62 by the drive unit 74, while reading the image of the document G.

Here, the image reading apparatus 60 is an example of a document reading apparatus.

### [Image Reading Unit]

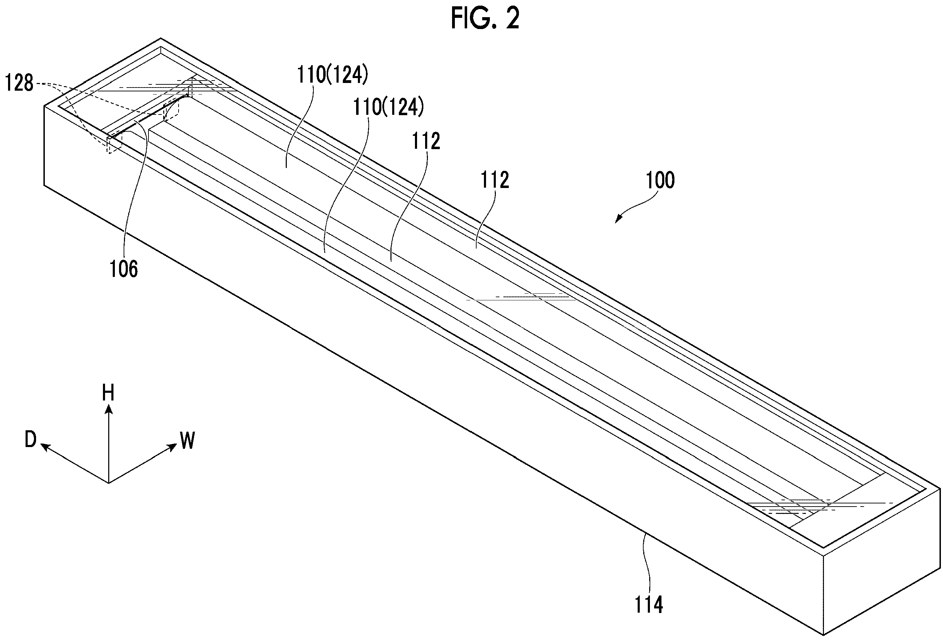

Fig. 2 is a perspective view illustrating the image reading unit 100 according to the present exemplary embodiment.

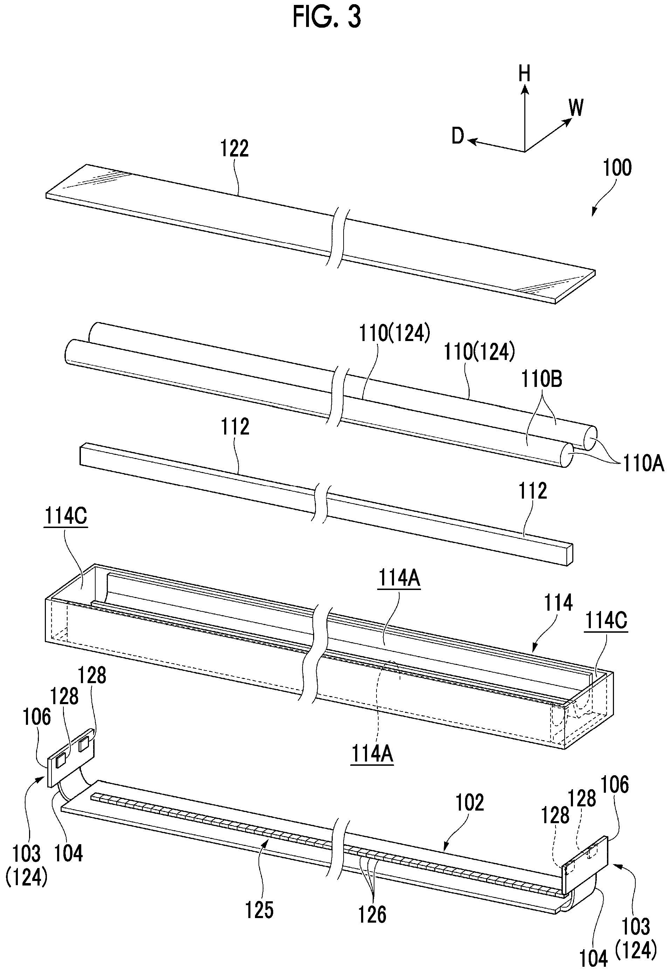

Fig. 3 is an exploded perspective view illustrating the image reading unit 100 according to the present exemplary embodiment.

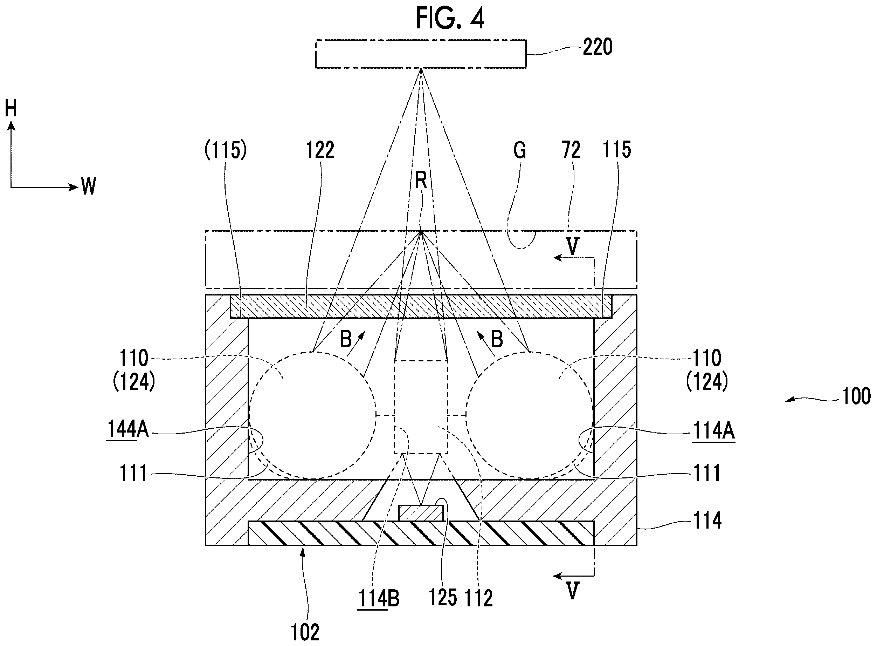

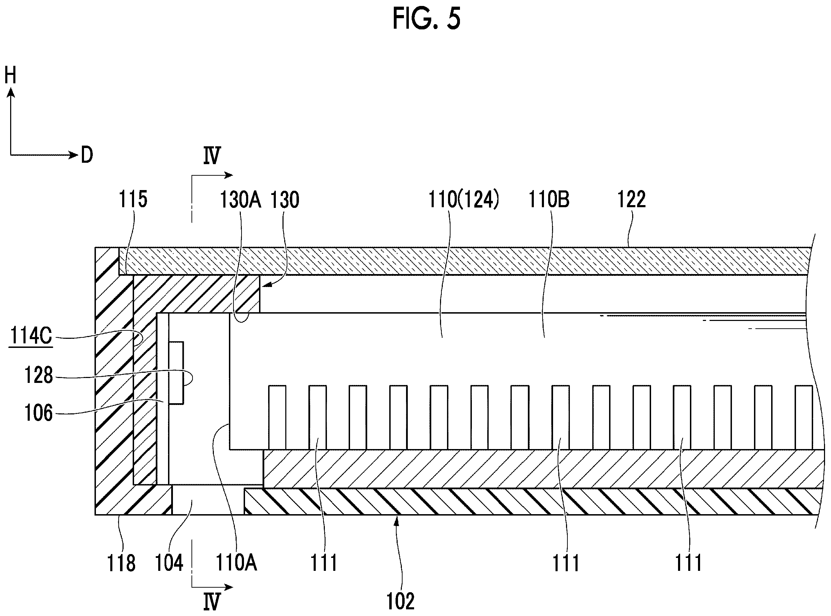

Fig. 4 is a cross-sectional diagram illustrating the image reading unit 100 according to the present exemplary embodiment. Specifically, Fig. 4 is a cross-sectional diagram taken along a line IV-IV of Fig. 5. Fig. 4 also illustrates the second transparent plate 72 and the mirror surface reflecting plate 220, which are not strictly components of the image reading unit 100.

Fig. 5 is a cross-sectional diagram illustrating the image reading unit 100 according to the present exemplary embodiment. Specifically, Fig. 5 is a cross-sectional diagram taken along a line V-V of Fig. 4.

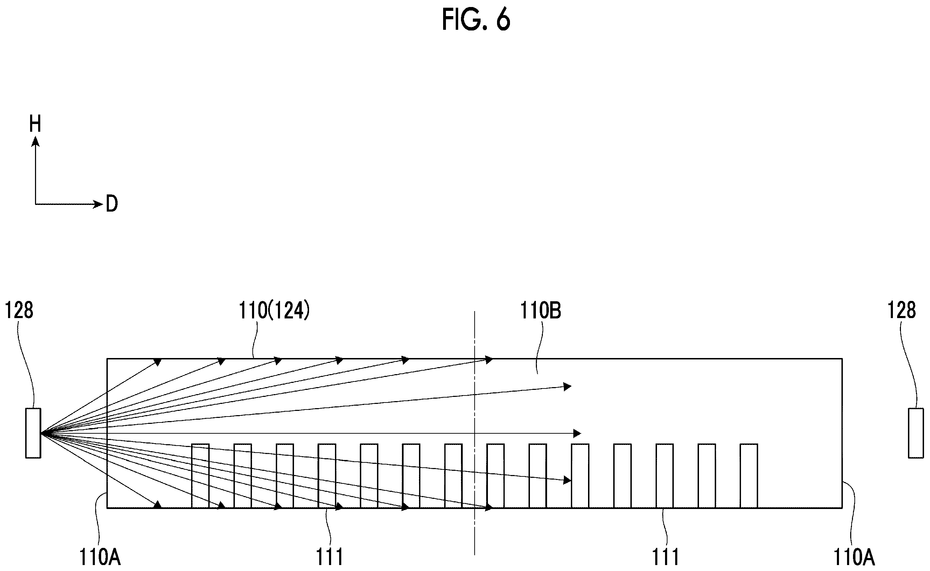

Fig. 6 is an explanatory diagram describing a diffusion pattern and light emitted from a light emitting element according to the present exemplary embodiment.

In these drawings, an up-down direction is indicated by H, an apparatus width direction is indicated by W, and an apparatus depth direction is indicated by D, respectively.

As illustrated in Figs. 2 to 6, the image reading unit 100 includes a light emitting unit 124 that irradiates the document G with light, a light receiving unit 125 that receives light, a rod lens array 112 that guides light to the light receiving unit 125, and a glass plate 122. The image reading unit 100 reads an image formed on the document G by using a known contact image sensor (CIS) method.

Further, in a case where the image reading unit 100 reads the image of the document G transported by the transport unit 64, the image reading unit 100 is disposed in a downward direction of the second transparent plate 72 and is directly below the mirror surface reflecting plate 220, as illustrated in Fig. 4. In this case, the document G transported by the transport unit 64 passes through the document reading position R on the second transparent plate 72. Then, in a case where the document G passes the document reading position R on the second transparent plate 72, the document G reflects light emitted from a side surface 110B of a light guide body 110 to be described below. On the other hand, in a case where the document G does not pass through the document reading position R on the second transparent plate 72, the mirror surface reflecting plate 220 reflects the light emitted from the side surface 110B of the light guide body 110 to be described below.

Here, the second transparent plate 72 is an example of a reading window portion through which a document passes. Further, the mirror surface reflecting plate 220 is an example of a mirror surface reflecting plate that mirror-reflects light emitted from a light guide body.

The light receiving unit 125 has a light receiving substrate 102 and a plurality of light receiving elements 126 arranged in the apparatus depth direction. As illustrated in Fig. 3, a plate thickness direction of the light receiving substrate 102 is an up-down direction. The light receiving substrate 102 has a rectangular shape extending in the apparatus depth direction, as viewed from above, and is disposed below the housing 114. Further, the plurality of light receiving elements 126 are mounted at an upper surface of the light receiving substrate 102.

In a case where the document G passes through the document reading position R on the second transparent plate 72, the light receiving unit 125 receives light emitted from the side surface 110B of the light guide body 110, which will be described below, and reflected by the document G. On the other hand, in a case where the document G does not pass through the document reading position R on the second transparent plate 72, the light receiving unit 125 receives light emitted from the side surface 110B of the light guide body 110, which will be described below, and reflected by the mirror surface reflecting plate 220.

Here, the light receiving unit 125 is an example of a light receiving unit that receives light reflected by a mirror surface reflecting plate. In addition, the light receiving unit 125 is an example of a light receiving unit that receives light emitted from a light guide body and reflected by a document in a case where the document passes through a reading window portion, and receives light reflected by a mirror surface reflecting plate in a case where the document does not pass through the reading window portion.

The rod lens array 112 is made of a transparent material (for example, glass), is formed in a rectangular parallelepiped shape extending in the apparatus depth direction, and is accommodated in a lens accommodating portion 114B in the housing 114, as illustrated in Fig. 4. In a case where the document G passes through the document reading position R on the second transparent plate 72, the rod lens array 112 is configured such that light is emitted from the side surface 110B of the light guide body 110, which will be described below, and is reflected by the document G, and is collected by the light receiving element 126. On the other hand, in a case where the document G does not pass through the document reading position R on the second transparent plate 72, the rod lens array 112 is configured such that light is emitted from the side surface 110B of the light guide body 110, which will be described below, is reflected by the mirror surface reflecting plate 220, and is collected by the light receiving element 126.

Here, the rod lens array 112 is an example of a lens unit that guides light reflected by a mirror surface reflecting plate to a light receiving unit.

As illustrated in Fig. 3, a plate thickness direction of the glass plate 122 is an up-down direction, and the glass plate 122 has a rectangular shape extending in the apparatus depth direction, as viewed from above. As illustrated in Fig. 4, the glass plate 122 is fixed to the housing 114 by a fixing section (not illustrated) in a state in which an edge portion of the glass plate 122 is in contact with a step portion 115 of the housing 114, and is disposed to cover an upper surface of the housing 114.

As illustrated in Figs. 3 and 4, the light emitting unit 124 includes the light guide body 110, an irradiation unit 103, and the housing 114 constituting the apparatus main body. The light emitting unit 124 has two light guide bodies 110, and the respective light guide bodies 110 are arranged in parallel to be symmetrical with respect to a center of the housing 114 in the apparatus width direction.

As illustrated in Fig. 3, the light guide body 110 is formed in a cylindrical shape using a transparent material (for example, acrylic resin), and extends in the apparatus depth direction as a longitudinal direction. The light guide body 110 is accommodated in a light guide body accommodating portion 114A of the housing 114. Further, the light guide body 110 advances light incident on one end surface 110A in the longitudinal direction, and irradiates the document G with light emitted from the side surface 110B.

Further, as illustrated in Figs. 4 to 6, the light guide body 110 is provided with a diffusion pattern 111 that diffuses light incident from the end surface 110A of the light guide body 110 and advances the light in the longitudinal direction, and emits the light toward an upper side of the rod lens array 112 (in an arrow B direction in Fig. 4). Further, as illustrated in Fig. 4, the diffusion pattern 111 is disposed on an opposite side not facing the document G, of the side surface 110B of the light guide body 110. More specifically, the diffusion pattern 111 is disposed on the opposite side not facing the document G of the side surfaces 110B of the two light guide bodies 110, and on a side away from the other light guide body 110. That is, the diffusion pattern 111 is displaced at a position at which a center of the fan-shaped diffusion pattern 111 illustrated in Fig. 4 in the apparatus width direction passes through a center of the light guide body 110 and faces the document reading position R, not directly below the light guide body 110 in an apparatus downward direction. Further, as illustrated in Fig. 6, the diffusion patterns 111 are provided over the light guide body 110 in the longitudinal direction at predetermined intervals. Here, as an example, the diffusion pattern 111 is configured with solidified white paint, and diffuses light traveling inside the light guide body 110 and advances the light toward an upper surface side (document G side) of the light guide body 110. Alternatively, a prism may be used as the diffusion pattern 111.

Here, the diffusion pattern 111 is an example of a scatterer disposed in a direction in which a side surface extends. Further, the light guide body 110 is an example of a light guide body that emits light incident from an end surface after being scattered by the scatterer.

As illustrated in Fig. 3, the irradiation unit 103 includes a wiring substrate 104, an element substrate 106, and an LED light emitting element 128 (hereinafter, "light emitting element 128").

The wiring substrate 104 is a so-called flexible flat cable, and is provided in pairs, as illustrated in Fig. 3. A base end of one wiring substrate 104 is connected to an end portion of the light receiving substrate 102 on the back side (left side in Fig. 3) in the apparatus depth direction, and a base end of the other wiring substrate 104 is connected to an end portion of the light receiving substrate 102 on the front side (right side in Fig. 3) in the apparatus depth direction.

The element substrate 106 is a so-called flexible printed circuit substrate, and a plate thickness direction of the element substrate 106 is the apparatus depth direction. The element substrate 106 is a substrate having a rectangular shape as viewed from the apparatus depth direction, is accommodated in a substrate accommodating portion 114C of the housing 114, and is provided in pairs, as illustrated in Fig 3. One element substrate 106 is connected to a tip of one wiring substrate 104, and the other element substrate 106 is connected to a tip of the other wiring substrate 104. Further, the light emitting elements 128 arranged in the apparatus width direction are mounted on one surface of each element substrate 106. The light emitting element 128 is an example of a light source that is provided on an end surface side of a light guide body, and emits light. Here, the element substrate 106 may have flexibility. The flexibility means, for example, that a substrate having a width of 10 mm is supported in a cantilevered state, and a portion of 10 mm from a support end is pushed from above with a force of 9.8 N and the amount of deflection becomes 1 mm or more.

As illustrated in Fig. 5, the light emitting element 128 is disposed on a surface of the element substrate 106 on the light guide body 110 side for each of the two light guide bodies 110 to face the end surface 110A of the light guide body 110. Each of the light emitting elements 128 emits light to irradiate the end surface 110A with the light.

### [Background of Present Exemplary Embodiment]

Meanwhile, in such an image reading apparatus 60, in a case where the transport unit 64 transports the document G along the transport path 70, the document G is tilted in some cases. In preparation for such a case, the image reading apparatus 60 may have a function of mechanically correcting the inclination of the document G (hereinafter, "mechanical skew correction function"). With the mechanical skew correction function, an inclination of a tip of the document G is corrected by abutting the document G against a stopped roller to create a loop, and a variation in a timing at which each location of the tip of the document G arrives at the document reading position R is reduced. Meanwhile, this mechanical skew correction function has a problem in that an impact sound in a case where the tip of the document G collides with the roller, an impact sound in a case where the loop of the document G is created or eliminated, and the like are generated.

In order to address such a problem, the image reading apparatus 60 may have a function of detecting a tilt angle of the document G and correcting the tilt angle by image processing. Meanwhile, the tilt angle of the document G cannot detected in a case where a difference between an output value of light reflected by the document G in a case where the document G passes through the document reading position R, and an output value of light reflected by the mirror surface reflecting plate 220 in a case where the document G does not pass through the document reading position R is equal to or more than a predetermined reference. Specifically, for example, in a case of 8-bit 256 gradations output, an output value of light reflected by the document G of a color of white is a value close to 240 LSB, so that an output value of light reflected by the mirror surface reflecting plate 220 is to be higher than 240 LSB.

Meanwhile, in a case where the light emitting element 128 adopts an illumination system that emits light from the end surface 110A of the light guide body 110 as in the image reading apparatus 60 described above, an output of the light from the light guide body 110 is reduced, so that an output of light reflected by the mirror surface reflecting plate 220 is also reduced. Further, in order to increase a speed of image reading or increase a focal depth, it is required to increase the output of the reflected light. Meanwhile, the image reading apparatus 60 described above cannot meet such a requirement.

Although a last output is illustrated in a form of 256 gradations output in the previous example, in a stage before the last output, a process is performed with a larger number of gradations, for example, 10-bit 1024 gradations, and the last output is rounded with 8-bit 256 gradations, in some cases. In the following, for the sake of description, a 10-bit output will be used.

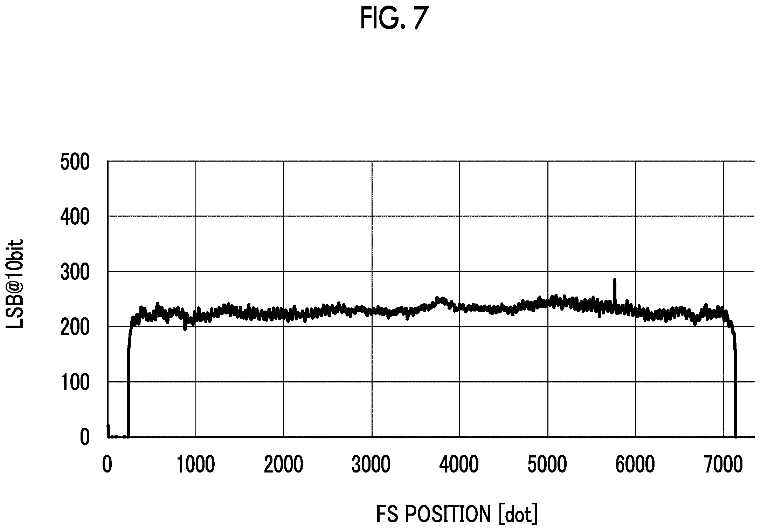

Fig. 7 is a first graph illustrating an output value of light reflected by the mirror surface reflecting plate 220. Here, the output value of the reflected light is measured by using the mirror surface reflecting plate 220 of the existing technique. In order to detect a tilt angle of the document G, the output value of the reflected light by the mirror surface reflecting plate 220 needs to be approximately 400 LSB. Meanwhile, in the first graph, the output value of the reflected light does not reach approximately 400 LSB, and it can be seen that the output of the reflected light is insufficient.

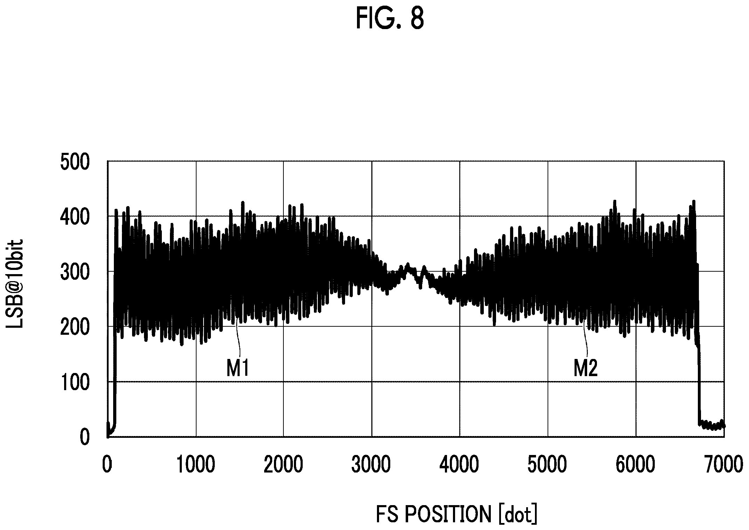

Fig. 8 is a second graph illustrating an output value of light reflected by the mirror surface reflecting plate 220. Here, the output value of the reflected light is measured by using the mirror surface reflecting plate 220 of the existing technique having a high reflectance. In the second graph, it can be seen that the output value of the light reflected by the mirror surface reflecting plate 220 reaches approximately 400 LSB, meanwhile, the uneven amounts of light (hereinafter, also simply referred to as "unevenness") occur due to projection of the diffusion pattern 111 (regions M1 and M2).

That is, there is no mirror surface reflecting plate 220 of the existing technique that does not cause a shortage of output of the reflected light and does not cause occurrence of the unevenness.

In addition, in recent years, the image reading apparatus 60 may have a function of detecting and correcting dust on the second transparent plate 72 (hereinafter, referred to as a "dust detection and correction function").

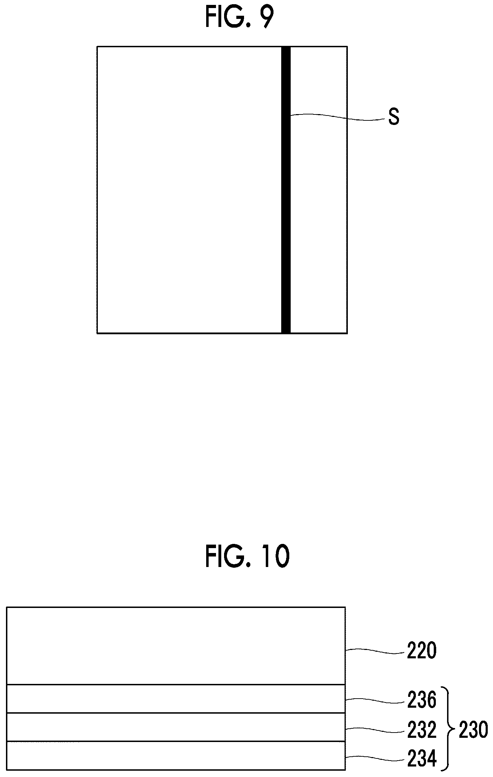

Fig. 9 is a diagram describing the dust detection and correction function. In a case where there is dust on the second transparent plate 72, an image of the document G is such that streaks S appear in a transport direction at the same locations in the width direction as illustrated. In this case, with the dust detection and correction function, it is determined that such streaks S are caused by the dust on the second transparent plate 72, and the streaks S are removed by image processing.

On the other hand, in a case where a lower limit of a region (regions M1 and M2 in Fig. 8) in which the reflectance of the mirror surface reflecting plate 220 is increased and unevenness occurs exceeds a target value, the inclination of the document G can be detected, but the unevenness cannot be distinguished from the streaks S illustrated in Fig. 9 and the dust cannot be detected by the dust detection and correction function.

### [Mirror Surface Reflecting Plate of Present Exemplary Embodiment]

Fig. 10 is a diagram illustrating a configuration example of the mirror surface reflecting plate 220 according to the present exemplary embodiment. As illustrated in Fig. 10, a diffusion plate 230 is disposed on the image reading unit 100 side at a lower surface of the mirror surface reflecting plate 220 in the present exemplary embodiment. Further, in the diffusion plate 230, a light diffusion layer 234 is provided on the image reading unit 100 side of a base material 232, and a backing coat layer 236 is provided on the mirror surface reflecting plate 220 side of the base material 232.

In a case where the mirror surface reflecting plate 220 and the diffusion plate 230 are combined in this manner, light emitted from the light guide body 110 passes through the diffusion plate 230, and the light reflected by the mirror surface reflecting plate 220 passes through the diffusion plate 230 again. That is, the light passes through the diffusion plate 230 twice. Thus, it is possible to increase the output of the light reflected by the mirror surface reflecting plate 220, and reduce the unevenness due to the reflected light.

Here, the diffusion plate 230 is an example of a diffusion plate that diffuses and transmits light emitted from a light guide body and emits the light on a mirror surface reflecting plate, and diffuses and transmits the light reflected by the mirror surface reflecting plate and emits the light to a light receiving unit. Further, a portion including the light guide body 110, the mirror surface reflecting plate 220, the diffusion plate 230, and the light receiving unit 125 is an example of an optical device.

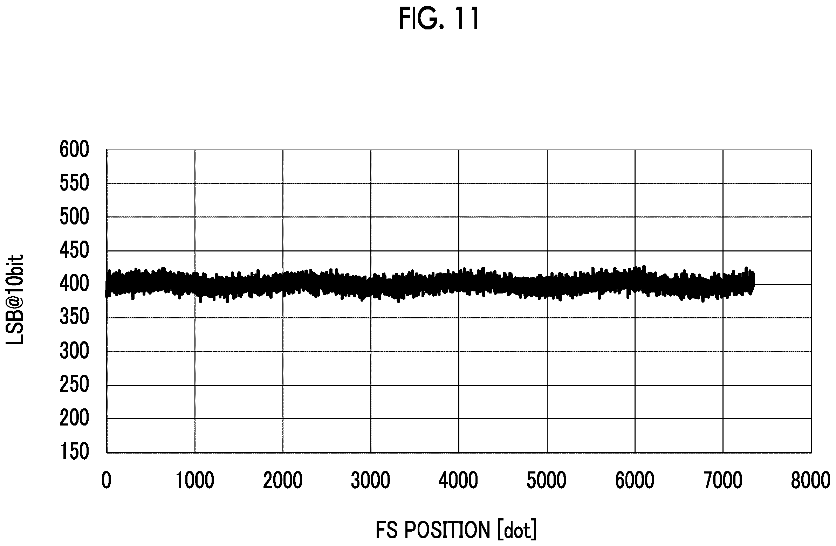

Fig. 11 is a graph illustrating an output value of light reflected by the mirror surface reflecting plate 220 in a case where the diffusion plate 230 is disposed at the mirror surface reflecting plate 220. In this graph, it can be seen that an output value of light reflected by the mirror surface reflecting plate 220 reaches a target value of approximately 400 LSB.

Meanwhile, in Fig. 10, it is conceivable to dispose the light diffusion layers 234 on both sides of the base material 232, but in that case, the output of the light reflected by the mirror surface reflecting plate 220 is insufficient.

Further, in Fig. 10, it is conceivable to dispose the backing coat layer 236 on the image reading unit 100 side of the base material 232 and to dispose the light diffusion layer 234 on the mirror surface reflecting plate 220 side of the base material 232, but in this case as well, the output of the light reflected by the mirror surface reflecting plate 220 is insufficient.

Therefore, in the present exemplary embodiment, among the surfaces of the diffusion plate 230, a surface with low reflection, that is, a surface with low specular reflectance is disposed on the image reading unit 100 side. Specifically, the light diffusion layer 234 is disposed on the image reading unit 100 side of the base material 232, and the backing coat layer 236 is disposed on the mirror surface reflecting plate 220 side of the base material 232.

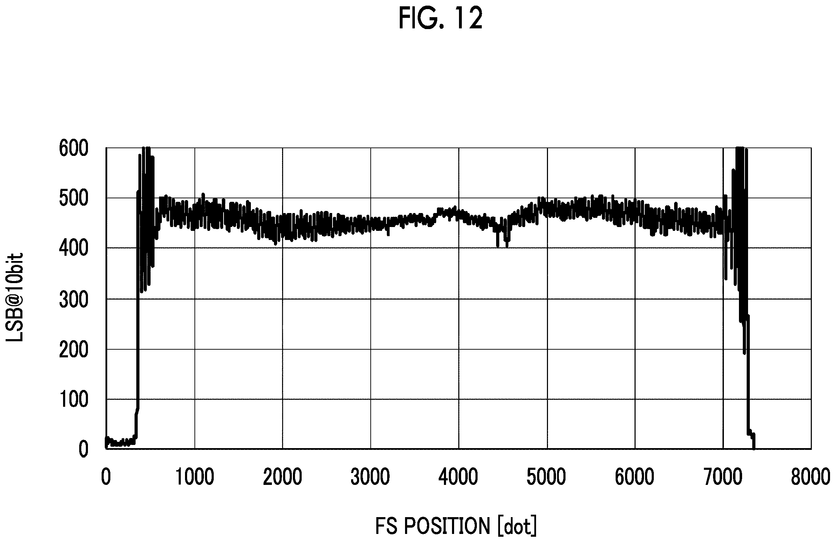

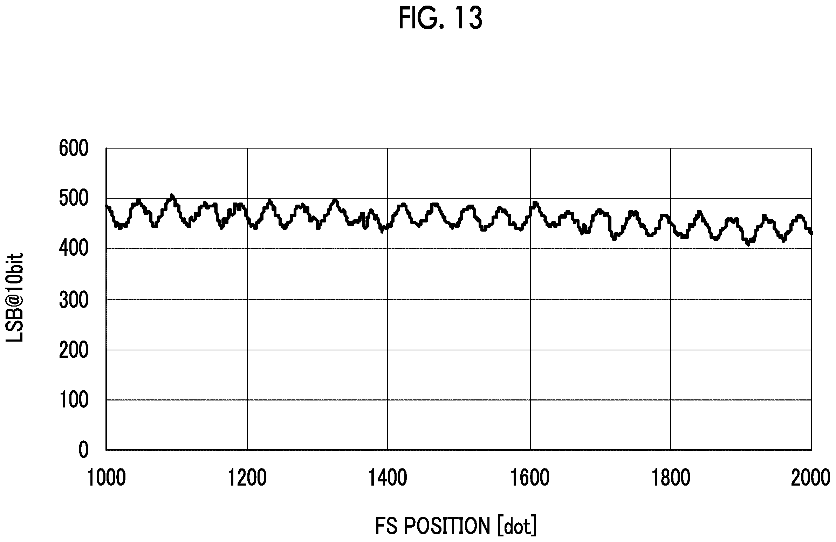

Fig. 12 is a graph illustrating an output value of light reflected by the mirror surface reflecting plate 220 in a case where the backing coat layer 236 is disposed on the image reading unit 100 side. Fig. 13 is a partially enlarged graph of the graph in Fig. 12. In these graphs, it can be seen that some unevenness remains in a case where the backing coat layer 236 is provided on the image reading unit 100 side.

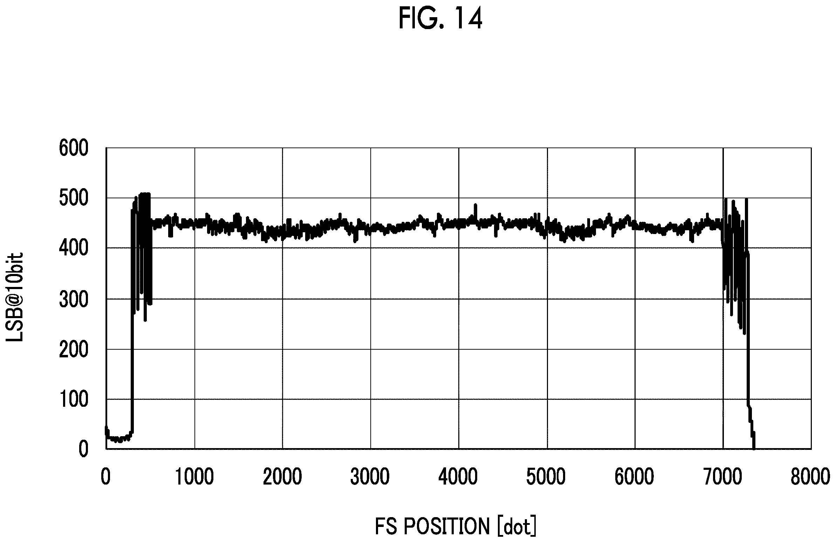

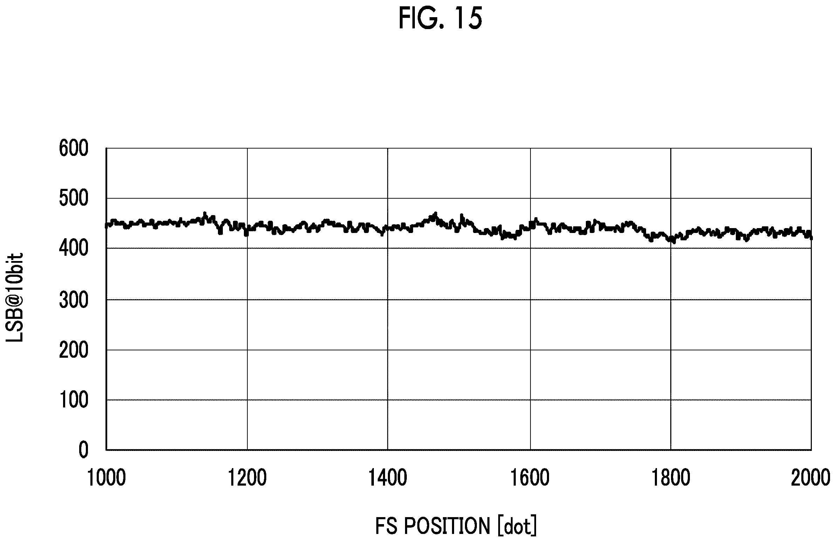

Fig. 14 is a graph illustrating an output value of light reflected by the mirror surface reflecting plate 220 in a case where the light diffusion layer 234 is disposed on the image reading unit 100 side. Fig. 15 is a partially enlarged graph of the graph in Fig. 14. In these graphs, it can be seen that in a case where the light diffusion layer 234 is provided on the image reading unit 100 side, almost no unevenness remains.

In the above description, a surface of the backing coat layer 236 is used as a surface with high reflection, a surface of the light diffusion layer 234 is used as a surface with low reflection, and the light diffusion layer 234 is disposed to face the light receiving unit 125 side. Meanwhile, the surface to be used is not limited to this. More generalized, a surface of a first layer having a first specular reflectance may be used as a surface with high reflection and a surface of a second layer having a second specular reflectance lower than the first specular reflectance may be used as a surface with low reflection, and the second layer may be disposed to face the light receiving unit side. In this case, the backing coat layer 236 is an example of the first layer, and the light diffusion layer 234 is an example of the second layer.

### [Modification Example of Mirror Surface Reflecting Plate]

In a modification example of the mirror surface reflecting plate 220 according to the present exemplary embodiment, recess portions are provided along a longitudinal direction of the light guide body 110 on the image reading unit 100 side of the mirror surface reflecting plate 220. That is, in the modification example of the mirror surface reflecting plate 220, the recess portions blur an apparent distance away, thereby eliminating the occurrence of unevenness.

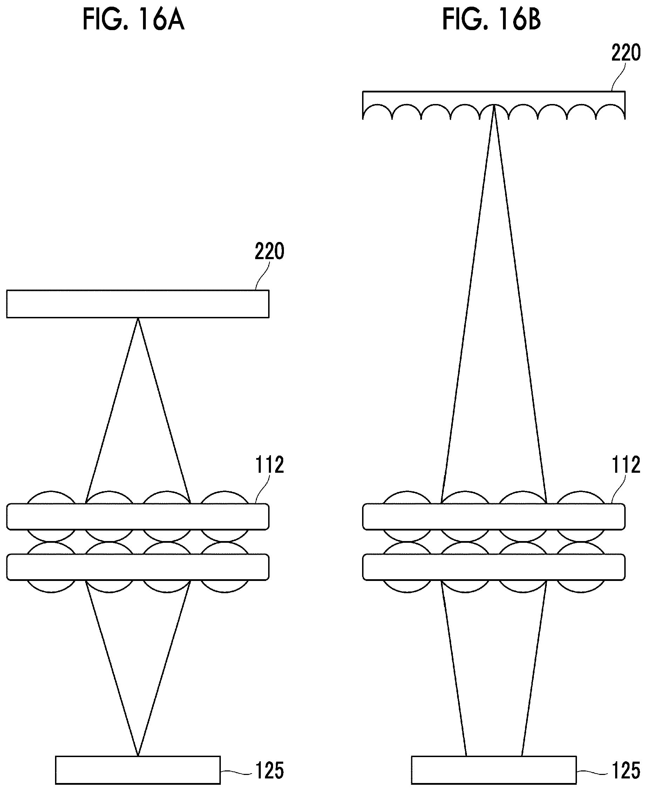

Figs. 16A and 16B are diagrams illustrating the modification example of the mirror surface reflecting plate 220 in the present exemplary embodiment.

Fig 16A is a diagram in a case where a recess portion is not provided on the image reading unit 100 side of the mirror surface reflecting plate 220. In this case, a focus point is focused on the light receiving unit 125, and unevenness occurs.

Fig. 16B is a diagram in a case where recess portions are provided on the image reading unit 100 side of the mirror surface reflecting plate 220. In this case, a distance from the mirror surface reflecting plate 220 to the rod lens array 112 becomes long, light on the light receiving unit 125 spreads, and unevenness becomes small.

In addition, in Figs. 16A and 16B, the mirror surface reflecting plate 220 is disposed at the same position in the up-down direction. Meanwhile, here, in order to emphasize that the distance from the mirror surface reflecting plate 220 to the rod lens array 112 is longer in Fig. 16B than in Fig. 16A, the mirror surface reflecting plate 220 in Fig. 16B is illustrated to be disposed at a higher position in the up-down direction than the mirror surface reflecting plate 220 in Fig. 16A.

In the above description, the recess portions are provided along the longitudinal direction of the light guide body 110 on the image reading unit 100 side of the mirror surface reflecting plate 220, and the description is not limited to this. The mirror surface reflecting plate 220 may have a property of preventing the light receiving unit 125 from being located within a focal depth of the rod lens array 112. In the above description, as an example of a method in which the mirror surface reflecting plate 220 has such a property, a method of disposing a recessed shape in a direction in which a side surface of the light guide body 110 extends is used.

In the modification example of the mirror surface reflecting plate 220, for example, the sheet-shaped diffusion plate 230 may be attached along the recess portions of the mirror surface reflecting plate 220.

Further, even in a case where the mirror surface reflecting plate 220 is not provided with the recess portion, for example, the reading guide member 210 to which the mirror surface reflecting plate 220 is attached may be provided with a recess portion, and the sheet-shaped mirror surface reflecting plate 220 and diffusion plate 230 may be attached along the recess portions of the reading guide member 210.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the appended claims.

### Brief Description of the Reference Symbols

60: image reading apparatus
100: image reading unit
110: light guide body
110A: end surface
110B: side surface
111: diffusion pattern
112: rod lens array
125: light receiving unit
128: light emitting element
220: mirror surface reflecting plate
230: diffusion plate
232: base material
234: light diffusion layer
236: backing coat layer

## Claims

1. An optical device comprising:
a light guide body (110) that scatters light incident from an end surface (110A) with a scatterer (111) disposed in a direction in which a side surface (110B) extends and emits the light;
a mirror surface reflecting plate (220) that mirror-reflects the light emitted from the light guide body (110);
a light receiving unit (125) that receives the light reflected by the mirror surface reflecting plate (220); and
a diffusion plate (230) that is disposed on a lower surface of the mirror surface reflecting plate (220) and diffuses and transmits the light emitted from the light guide body (110) and emits the light onto the mirror surface reflecting plate (220), and diffuses and transmits the light reflected by the mirror surface reflecting plate (220) and emits the light to the light receiving unit (125),
the optical device being **characterized in that**:
the diffusion plate (230) includes a first layer (236) having a first specular reflectance and a second layer (234) having a second specular reflectance lower than the first specular reflectance, and the second layer (234) is disposed to face a light receiving unit side.

2. The optical device according to claim 1,
wherein the first layer (236) is a backing coat layer, and
the second layer (234) is a light diffusion layer.

3. The optical device according to claim 1, further comprising:
a lens unit (112) that guides the light reflected by the mirror surface reflecting plate (220) to the light receiving unit (125),
wherein the mirror surface reflecting plate (220) has a property of preventing the light receiving unit (125) from being located within a focal depth of the lens unit (112).

4. The optical device according to claim 3,
wherein the mirror surface reflecting plate (220) is provided with a recess portion shape disposed in a direction in which the side surface (110B) of the light guide body (110) extends, to have the property.

5. A document reading apparatus (60) comprising:
a light source (128) that is provided on an end surface side of a light guide body (110) and emits light;
a reading window portion (72) through which a document (G) passes; and
the optical device according to any one of claims 1 to 4,
wherein in a case where the document (G) passes through the reading window portion (72), the light receiving unit (125) receives the light emitted from the light guide body (110) and reflected by the document (G), and in a case where the document (G) does not pass through the reading window portion (72), the light receiving unit (125) receives the light reflected by the mirror surface reflecting plate (220).

## Patentansprüche

1. Optische Vorrichtung, umfassend:
einen Lichtleiterkörper (110), der Licht, das von einer Endfläche (110A) einfällt, mit einem Streuer (111), der in einer Richtung, in der sich eine Seitenfläche (110B) erstreckt, angeordnet ist, streut und das Licht emittiert;
eine Spiegelflächen-Reflektionsplatte (220), die das von dem Lichtleiterkörper (110) emittierte Licht spiegelnd reflektiert;
eine Lichtempfangseinheit (125), die das von der Spiegelflächen-Reflektionsplatte (220) reflektierte Licht empfängt; und
eine Diffusionsplatte (230), die an einer unteren Fläche der Spiegelflächen-Reflektionsplatte (220) angeordnet ist und das von dem Lichtleiterkörper (110) emittierte Licht diffundiert und transmittiert und das Licht auf die Spiegelflächen-Reflektionsplatte (220) emittiert und das von der Spiegelflächen-Reflektionsplatte (220) reflektierte Licht diffundiert und transmittiert und das Licht an die Lichtempfangseinheit (125) emittiert,
wobei die optische Vorrichtung **dadurch gekennzeichnet ist, dass**:
die Diffusionsplatte (230) eine erste Schicht (236) mit einem ersten Spiegelreflexionsgrad und eine zweite Schicht (234) mit einem zweiten Spiegelreflexionsgrad, der niedriger als der erste Spiegelreflexionsgrad ist, enthält und die zweite Schicht (234) so angeordnet ist, dass sie einer Seite von Lichtempfangseinheit zugewandt ist.

2. Optische Vorrichtung nach Anspruch 1,
wobei die erste Schicht (236) eine Rückseitenbeschichtungsschicht ist, und die zweite Schicht (234) eine Lichtdiffusionsschicht ist.

3. Optische Vorrichtung nach Anspruch 1, ferner umfassend:
eine Linseneinheit (112), die das von der Spiegelflächen-Reflektionsplatte (220) reflektierte Licht zu der Lichtempfangseinheit (125) leitet,
wobei die Spiegelflächen-Reflektionsplatte (220) eine Eigenschaft aufweist, die verhindert, dass sich die Lichtempfangseinheit (125) innerhalb einer Fokustiefe der Linseneinheit (112) befindet.

4. Optische Vorrichtung nach Anspruch 3,
wobei die Spiegelflächen-Reflektionsplatte (220) mit einer Aussparungsabschnittsform, die in einer Richtung, in der sich die Seitenfläche (110B) des Lichtleiterkörpers (110) erstreckt, angeordnet ist, versehen ist, um die Eigenschaft aufzuweisen.

5. Dokumentenleservorrichtung (60), umfassend:
eine Lichtquelle (128), die auf einer Endflächenseite eines Lichtleiterkörpers (110) vorgesehen ist und Licht emittiert;
einen Lesefensterabschnitt (72), durch den ein Dokument (G) hindurchgeht; und
die optische Vorrichtung nach einem der Ansprüche 1 bis 4,
wobei in einem Fall, in dem das Dokument (G) durch den Lesefensterabschnitt (72) hindurchgeht, die Lichtempfangseinheit (125) das von dem Lichtleiterkörper (110) emittierte und von dem Dokument (G) reflektierte Licht empfängt und in einem Fall, in dem das Dokument (G) nicht durch den Lesefensterabschnitt (72) hindurchgeht, die Lichtempfangseinheit (125) das von der Spiegelflächen-Reflektionsplatte (220) reflektierte Licht empfängt.

## Revendications

1. Dispositif optique comprenant :
un corps de guide de lumière (110) qui diffuse de la lumière incidente provenant d'une surface d'extrémité (110A) avec un diffuseur (111) disposé dans une direction dans laquelle une surface latérale (110B) s'étend et émet la lumière ;
une plaque réfléchissante à surface miroir (220) qui réfléchit en miroir la lumière émise par le corps de guide de lumière (110) ;
une unité de réception de lumière (125) qui reçoit la lumière réfléchie par la plaque réfléchissante à surface miroir (220) ; et
une plaque de diffusion (230) qui est disposée sur une surface inférieure de la plaque réfléchissante à surface miroir (220) et diffuse et transmet la lumière émise par le corps de guide de lumière (110) et émet la lumière sur la plaque réfléchissante à surface miroir (220), et diffuse et transmet la lumière réfléchie par la plaque réfléchissante à surface miroir (220) et émet la lumière vers l'unité de réception de lumière (125),
le dispositif optique étant **caractérisé en ce que** :
la plaque de diffusion (230) inclut une première couche (236) ayant une première réflectance spéculaire et une deuxième couche (234) ayant une deuxième réflectance spéculaire inférieure à la première réflectance spéculaire, et la deuxième couche (234) est disposée pour faire face à un côté d'unité de réception de lumière.

2. Dispositif optique selon la revendication 1,
dans lequel la première couche (236) est une couche de revêtement de support, et la deuxième couche (234) est une couche de diffusion de lumière.

3. Dispositif optique selon la revendication 1, comprenant en outre :
une unité de lentille (112) qui guide la lumière réfléchie par la plaque réfléchissante à surface miroir (220) vers l'unité de réception de lumière (125),
dans lequel la plaque réfléchissante à surface miroir (220) a une propriété d'empêcher l'unité de réception de lumière (125) d'être située dans une profondeur de champ de l'unité de lentille (112).

4. Dispositif optique selon la revendication 3,
dans lequel la plaque réfléchissante à surface miroir (220) est pourvue d'une forme de partie en retrait disposée dans une direction dans laquelle la surface latérale (110B) du corps de guide de lumière (110) s'étend, pour avoir la propriété.

5. Appareil de lecture de documents (60) comprenant :
une source de lumière (128) qui est disposée sur un côté de surface d'extrémité d'un corps de guide de lumière (110) et émet de la lumière ;
une partie de fenêtre de lecture (72) à travers laquelle un document (G) passe ; et
le dispositif optique selon l'une quelconque des revendications 1 à 4,
dans lequel dans un cas où le document (G) passe à travers la partie de fenêtre de lecture (72), l'unité de réception de lumière (125) reçoit la lumière émise par le corps de guide de lumière (110) et réfléchie par le document (G), et dans un cas où le document (G) ne passe pas à travers la partie de fenêtre de lecture (72), l'unité de réception de lumière (125) reçoit la lumière réfléchie par la plaque réfléchissante à surface miroir (220).
